# EUROPÄISCHE PATENTANMELDUNG

(11) **EP 3 543 810 A1**
(43) Veröffentlichungstag der Anmeldung: **25.09.2019**
(21) Anmeldenummer: 19163387.4
(22) Anmeldetag: 18.03.2019
(51) Int. Cl.: G05B 19/409, G02B 27/01, G06F 3/048, G06T 19/00

(54) **SYSTEM ZUR VIRTUELLEN UNTERSTÜTZUNG EINER BEDIENPERSON FÜR HOLZBEARBEITUNGSMASCHINEN**

(30) Priorität: 19.03.2018 DE 102018204152
(71) Anmelder: HOMAG GmbH, 72296 Schopfloch (DE)
(72) Erfinder: Zetzsche, Michael, 72458 Albstadt (DE); Robbe, Marco, 32657 Lemgo (DE); Bergmann, Jan, 32657 Lemgo (DE); Worm, Marc, 72296 Schopfloch (DE)
(74) Vertreter: Hoffmann Eitle

(57) **Zusammenfassung**

System (1) zur virtuellen Unterstützung einer Bedienperson einer Bearbeitungsvorrichtung (B1, B2, B3) zum Bearbeiten von Werkstücken (W), die bevorzugt zumindest abschnittsweise aus Holz, Holzwerkstoffen, Kunststoff oder dergleichen bestehen, umfassend: ein mobiles Endgerät (10), das eingerichtet ist, von der Bedienperson getragen zu werden, und das aufweist: Positionserfassungsmittel (11), die eingerichtet sind, Daten zur Bestimmung der Position des mobilen Endgeräts (10) in Bezug auf die Bearbeitungsvorrichtung (B1, B2, B3) zu erfassen, Informationsausgabemittel (12), die eingerichtet sind, Informationen und/oder Handlungsanweisungen an die Bedienperson auszugeben, und eine bevorzugt drahtlose Datenübertragungsschnittstelle (13), die eingerichtet ist, mit einem Datenserver (20) zu kommunizieren.

## Beschreibung

### Technisches Gebiet

Die Erfindung betrifft ein System zur virtuellen Unterstützung einer Bedienperson einer Bearbeitungsvorrichtung zum Bearbeiten von Werkstücken, die bevorzugt zumindest abschnittsweise aus Holz, Holzwerkstoffen, Kunststoff oder dergleichen bestehen.

### Stand der Technik

Im Bereich der Möbel- und Bauelementeindustrie werden immer komplexere Maschinen zur Bearbeitung und Veredelung der Werkstücke eingesetzt. Diese Maschinen erfüllen vielfältige Aufgaben von der Formatbearbeitung über die Oberflächenbeschichtung bis hin zur Vormontage und Montage. Dabei werden sehr hohe Anforderungen an die Präzision und Leistungsfähigkeit der Maschinen gestellt, was zu immer komplexeren Systemen führt. Diese komplexen Systeme stellen erhöhte Anforderungen an die Qualifikation der jeweiligen Bedienperson, da Inbetriebnahme, Bedienung, Wartung und Reparatur der Maschinen Detailkenntnisse über den mechanischen und elektronischen Aufbau der Maschinen erfordern.

In der Praxis führt dies dazu, dass zunehmend hohe Anforderungen an die Qualifikation des Bedienpersonals gestellt werden. Darüber hinaus erhöht sich aufgrund der Komplexität die Gefahr von Fehlern im Umgang mit der Maschine, was die Effizienz und Betriebssicherheit der jeweiligen Maschine beeinträchtigen kann.

### Darstellung der Erfindung

Es ist daher Aufgabe der vorliegenden Erfindung, ein System und Verfahren zur virtuellen Unterstützung einer Bedienperson der eingangs genannten Art bereitzustellen, die den Umgang mit der Bearbeitungsvorrichtung erleichtert und die Effizienz und Betriebssicherheit der Bearbeitungsvorrichtung erhöht. Unter Umgang sind dabei vielfältige Tätigkeiten zu verstehen, wie insbesondere Inbetriebnahme, Bedienung, Wartung, Reparatur, etc.

Diese Aufgabe wird erfindungsgemäß durch ein System zur virtuellen Unterstützung einer Bedienperson nach Anspruch 1 sowie ein Verfahren zur virtuellen Unterstützung einer Bedienperson nach Anspruch 12 gelöst. Besonders bevorzugte Ausführungsformen der Erfindung sind in den abhängigen Ansprüchen angegeben.

Der Erfindung liegt der Gedanke zugrunde, der Bedienperson stets maßgeschneidert diejenige Unterstützung bereitzustellen, die im gerade aktuellen Kontext benötigt wird und zielführend ist. Zu diesem Zweck weist das erfindungsgemäße System zur virtuellen Unterstützung einer Bedienperson einer Bearbeitungsvorrichtung zum Bearbeiten von Werkstücken, die bevorzugt zumindest abschnittsweise aus Holz, Holzwerkstoffen, Kunststoff oder dergleichen bestehen, ein mobiles Endgerät auf, das eingerichtet ist, von der Bedienperson getragen zu werden. Das mobile Endgerät umfasst Positionserfassungsmittel, die eingerichtet sind, Daten zur Bestimmung der Position des mobilen Endgeräts in Bezug auf die Bearbeitungsvorrichtung zu erfassen, Informationsausgabemittel, die eingerichtet sind, Informationen und/oder Handlungsanweisungen an die Bedienperson auszugeben, und eine bevorzugt drahtlose Datenübertragungsschnittstelle, die eingerichtet ist, mit einem Datenserver zu kommunizieren.

Dank der Positionserfassungsmittel ist das erfindungsgemäße System stets in der Lage, der Bedienperson exakt diejenigen Informationen bzw. Handlungsanweisungen bereitzustellen, die für die aktuelle Position der Bedienperson an der Bearbeitungsvorrichtung einschlägig und relevant sind. Gleichzeitig ermöglichen die Informationsausgabemittel, der Bedienperson die jeweiligen Informationen bzw. Handlungsanweisungen in integrierter und anschaulicher Weise zur Verfügung zu stellen. Dabei ermöglicht die bevorzugt drahtlose Datenübertragungsschnittstelle, dass auf einen großen Pool von Informationen bzw. Handlungsanweisungen zugegriffen werden kann, die auf einem Datenserver gespeichert sind.

Im Ergebnis ermöglicht das erfindungsgemäße System eine deutlich vereinfachte Bedienung einer möglicherweise komplexen Bearbeitungsvorrichtung. Dies ermöglicht nicht nur den Einsatz einer möglicherweise weniger geschulten Bedienperson, sondern steigert auch die Effizienz und Betriebssicherheit der Bearbeitungsvorrichtung, insbesondere da die Wahrscheinlichkeit von Bedienungsfehlern (einschließlich Fehlern bei Inbetriebnahme, während des Betriebs, bei Wartung, Reparatur, etc.) deutlich vermindert werden kann.

Obgleich das erfindungsgemäße System auch Informationen und/oder Handlungsanweisungen für die Bedienperson bereitstellen kann, die positionsunabhängig ist, ist gemäß einer Weiterbildung der Erfindung vorgesehen, dass die Datenübertragungsschnittstelle eingerichtet ist, von den Positionserfassungsmitteln erfasste Positionsdaten an den Server zu übertragen und/oder von dem Datenserver erhaltene Informationen und/oder Handlungsanweisungen zur Weitergabe an die Informationsausgabemittel zu empfangen. Auf diese Weise wird die zielgenaue Zuordnung von Informationen und/oder Handlungsanweisungen einerseits und den betroffenen bzw. relevanten Bereichen oder Bauteilen der Bearbeitungsvorrichtung andererseits ermöglicht. Dies trägt ebenfalls zu einer einfachen und gleichzeitig sicheren Bedienbarkeit der Bearbeitungsvorrichtung bei.

Zu diesem Zweck ist gemäß einer Weiterbildung der Erfindung vorgesehen, dass die Informationsausgabemittel eingerichtet sind, Informationen und/oder Handlungsanweisungen unter Bezugnahme auf die Bearbeitungsvorrichtung auszugeben. Somit ist für die Bedienperson sofort ersichtlich, auf welche Bereiche oder Bauteile der Bearbeitungsvorrichtung sich die Informationen bzw. Handlungsanweisungen beziehen. Dabei ist es besonders bevorzugt, dass die Informationen und/oder Handlungsanweisungen gemeinsam und unter Bezugnahme auf eine tatsächliche oder virtuelle Darstellung der Bearbeitungsvorrichtung ausgegeben werden. Hierdurch ergibt sich eine besonders anschauliche Art der Darstellung, bei welcher die Informationen bzw. Handlungsanweisungen in direkte visuelle Beziehung zu der Bearbeitungsvorrichtung gesetzt werden. Auf diese Weise lassen sich nicht nur Reparatur- und Wartungsvorgänge zuverlässig anleiten, sondern es kann beispielsweise auch ein Anlernen einer Bedienperson an der jeweiligen Bearbeitungsvorrichtung erfolgen.

Die Informationsausgabemittel können im Rahmen der vorliegenden Erfindung auf vielfältige Art und Weise ausgestaltet sein. Gemäß einer bevorzugten Ausführungsform der Erfindung sind die Informationsausgabemittel jedoch ausgewählt aus Bildausgabemittel, Tonausgabemittel und Tastausgabemittel, insbesondere Vibrationsausgabemittel. Je nach Anwendungsfall kann die Art des Informationsausgabemittels bestimmte Vorteile besitzen. So lassen sich komplexe Sachverhalte am besten mit einem Bildausgabemittel anzeigen. Tonausgabemittel eignen sich oft für einfachere Informationen, besitzen aber den Vorteil, dass die Aufmerksamkeit der Bedienperson wirksamer geweckt werden kann und die Bedienperson beispielsweise mit den Augen und Händen weiterhin ihrer gegenwärtigen Tätigkeit nach gehen kann. Ähnliche Überlegungen gelten auch für Tastausgabemittel, insbesondere im Falle von Vibrationsausgabemitteln.

Das Informationsausgabemittel kann eines oder mehrere der genannten Ausgabemittel beinhalten und auf eines oder mehrere Bauteile verteilt sein. Eine besonders vielseitige und detailreiche sowie gut wahrnehmbare Informationsausgabe ergibt sich, wenn gemäß einer Weiterbildung der Erfindung die Bildausgabemittel mindestens eine virtuelle oder projizierte Darstellung beinhalten. Ein Beispiel für eine derartige Bildausgabe kann bei einem Endgerät vorliegen, das am Kopf eines Benutzers im Bereich der Augen getragen wird, beispielsweise nach Art einer sogenannten "Smartbrille".

Gemäß einer Weiterbildung der Erfindung ist ferner vorgesehen, dass es Eingabemittel aufweist, die eingerichtet sind, Eingaben der Bedienperson zur Weiterleitung an die Datenübertragungsschnittstelle sowie den Datenserver zu empfangen, um so den Erhalt von Informationen und/oder Handlungsanweisungen zu steuern. Auf diese Weise ergibt sich ein interaktives System, bei welchem die Bedienperson die gewünschten Informationen und/oder Handlungsanweisungen abrufen kann, die durch das erfindungsgemäße System in dem aktuellen Kontext verfügbar sind. Hierdurch wird die Effizienz, aber auch die Sicherheit des Betriebs der Vorrichtung weiter gesteigert.

Die Informationseingabemittel können im Rahmen der vorliegenden Erfindung auf vielfältige Art und Weise ausgestaltet sein. So kann es sich beispielsweise um Tasteingabemittel handeln, wie insbesondere eine Tastatur oder einen Touchscreen. Alternativ oder zusätzlich können jedoch auch Toneingabemittel zum Einsatz kommen, wie beispielsweise Spracherkennungsmittel. Diese besitzen prinzipiell dieselben Vorteile wie die oben genannten Sprachausgabemittel. Weiterhin alternativ oder zusätzlich können auch Bewegungserfassungsmittel zum Einsatz kommen. Typische Bewegungserfassungsmittel sind dabei Gestenerfassungsmittel, bei denen die Bedienperson durch eine bloße Bewegung eines Körperteils eine Information in das Endgerät eingeben kann. Eine andere Art eines Bewegungserfassungsmittels ist ein sogenannter virtueller Touchscreen, bei dem im Sichtfeld der Bedienperson ein virtuelles Bild erzeugt oder projiziert wird und eine Bewegung des Benutzers mit dem virtuellen oder projizierten Bild in Beziehung gesetzt wird, um eine Informationseingabe zu bewirken.

Auch die Positionserfassungsmittel können im Rahmen der vorliegenden Erfindung auf vielfältige Art und Weise ausgestaltet sein. Als besonders vorteilhaft hat sich jedoch der Einsatz einer Kamera erwiesen, wobei auch hier verschiedene Varianten denkbar sind, wie beispielsweise CCD-Kameras etc. Alternativ oder zusätzlich können die Positionserfassungsmittel auch ein GPS-System oder ein vergleichbares, lokales Positionierungssystem beinhalten, das beispielsweise lediglich innerhalb einer Produktionshalle Signale empfängt und auf dieser Grundlage die aktuelle Position ableitet. Denkbar sind auch Sensoren einschließlich thermische Sensoren oder Gyro-Sensoren, sowie Laserscanner etc.

Gemäß einer Weiterbildung der Erfindung ist vorgesehen, dass das Endgerät Mittel aufweist, um das Endgerät am Körper der Bedienperson zu tragen, insbesondere am Arm oder im Kopfbereich. Hierdurch ergibt sich eine mühelose Ablesbarkeit und Bedienbarkeit des mindestens einen Endgeräts für die Bedienperson, und die Bedienperson wird auch in ihrer Tätigkeit nicht behindert, hat sozusagen "die Hände frei".

Besondere Wirksamkeit entfaltet das erfindungsgemäße System, wenn es neben dem mobilen Endgerät mindestens eine Bearbeitungsvorrichtung zum Bearbeiten von Werkstücken, die bevorzugt zumindest abschnittsweise aus Holz, Holzwerkstoffen, Kunststoffen oder dergleichen bestehen, und einen Datenserver, der über eine Datenverbindung mit der Datenübertragungsschnittstelle des Endgeräts kommuniziert, aufweist. Die Datenverbindung kann dabei lokal (beispielsweise innerhalb einer Produktionsanlage) oder auch nicht-lokal, beispielsweise über das Internet, erfolgen.

Gemäß einer Weiterbildung der Erfindung ist dabei vorgesehen, dass mindestens eine Bearbeitungsvorrichtung eine Maschinendatenübertragungsschnittstelle aufweist, die über eine Datenverbindung, insbesondere auch unter Nutzung des Internets, mit dem Datenserver kommuniziert. Hierdurch wird ermöglicht, auch aktuelle Maschineninformationen wie beispielsweise Betriebs- und Störungszustände, Wartungsbedarf, Reparaturbedarf oder dergleichen über den Datenserver an die Bedienperson weiterzugeben und mit weiterführenden Informationen und/oder Handlungsanweisungen zu verknüpfen.

Ein besonders vorteilhafter Betrieb des erfindungsgemäßen Systems ergibt sich bei Durchführung des erfindungsgemäßen Verfahrens, das in Patentanspruch 12 definiert ist. Dabei werden Daten zur Bestimmung der Position des mobilen Endgeräts in Bezug auf die Bearbeitungsvorrichtung mittels der Positionserfassungsmittel erfasst, die Daten werden über die Datenübertragungsschnittstelle an den Datenserver weitergegeben, und es werden Informationen und/oder Handlungsanweisungen von dem Datenserver erhalten und Informationen und/oder Handlungsanweisungen mittels der Informationsausgabemittel ausgegeben. Hierdurch ergeben sich auf besonders effektive Weise die oben in Bezug auf das erfindungsgemäße System erläuterten Vorteile.

Ein besonders interaktives und somit auch effektives und sicheres Verfahren erhält man, wenn gemäß einer Weiterbildung der Erfindung aus den von dem Datenserver erhaltenen Informationen und/oder Handlungsanweisungen diejenigen mittels der Informationsausgabemittel angezeigt werden, die mittels der Eingabemittel ausgewählt werden.

Dabei ist besonders bevorzugt, dass die Informationen und/oder Handlungsanweisungen auf eine tatsächliche oder virtuelle Darstellung der Bearbeitungsvorrichtung Bezug nehmen und bevorzugt gemeinsam mit dieser Darstellung ausgegeben werden. Hierdurch ergibt sich eine besonders anschauliche und somit effektive und sichere Art, der Bedienperson die jeweiligen Informationen und/oder Handlungsanweisungen zu vermitteln. Denn die Bedienperson erhält die Informationen und/oder Handlungsanweisungen nicht als abstrakte Mitteilung, sondern in konkretem Zusammenhang mit dem betreffenden Bauteil oder Bereich der Bearbeitungsvorrichtung.

Eine besonders hohe Anschaulichkeit ergibt sich ferner, wenn gemäß einer Weiterbildung der Erfindung eine virtuelle Darstellung mindestens einen Bereich der Bearbeitungsvorrichtung beinhaltet, der im zusammengebauten Zustand der Bearbeitungsvorrichtung nicht sichtbar ist. Dies bedeutet, dass die Bedienperson gewissermaßen "in die Maschine hineinsehen" kann, oder dass der Bedienperson bereits im Voraus Informationen und/oder Handlungsanweisungen angezeigt werden, die erst im weiteren Verlauf der Tätigkeit der Bedienperson tatsächlich sichtbar werden. Auch hieraus ergibt sich eine deutliche Steigerung der Effizienz und Sicherheit, da die Bedienperson weiß, was sie erwartet. Somit kann die Bedienperson die erforderlichen Vorbereitungen für die weiteren Schritte treffen und darüber hinaus auch abschätzen, ob zukünftige Sachverhalte, die für die Bedienperson ohne das erfindungsgemäße System noch unsichtbar wären, bei der weiteren Tätigkeit zu berücksichtigen sind.

Um die Bedienperson bei den vielfältigen Tätigkeiten wirksam und anschaulich zu unterstützen, ist gemäß einer Weiterbildung der Erfindung ferner vorgesehen, dass die mittels der Informationsausgabemittel ausgegebenen Informationen und/oder Handlungsanweisungen Einzelbilder, Bildersequenzen und/oder Videos enthalten. Hierdurch kann je nach Anwendungsfall eine anschauliche und wirksame Einweisung und Anleitung der Bedienperson erfolgen, wobei die Bedienperson im Rahmen der Erfindung selbstverständlich bedarfsweise auswählen kann, welche (verfügbare) Darstellungsform sie für den jeweiligen Anwendungsfall wünscht.

### Kurze Beschreibung der Zeichnungen

Fig. 1 zeigt schematisch eine Ausführungsform des erfindungsgemäßen Systems zur virtuellen Unterstützung einer Bedienperson;
Fig. 2 zeigt schematisch den Einsatz des erfindungsgemäßen Systems an einer Bearbeitungsvorrichtung zum Bearbeiten von Werkstücken.

### Ausführliche Beschreibung bevorzugter Ausführungsformen

Bevorzugte Ausführungsformen der Erfindung werden nachfolgend ausführlich unter Bezugnahme auf die begleitenden Zeichnungen beschrieben.

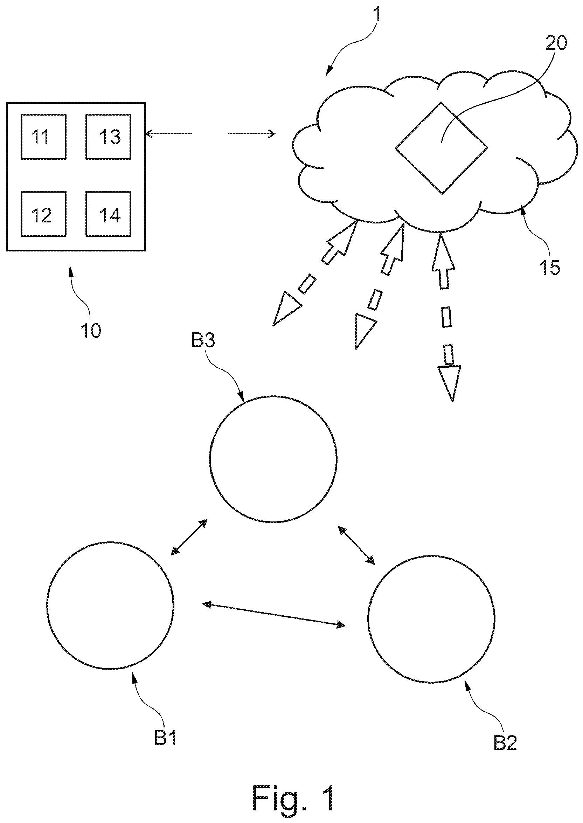

Ein System 1 zur virtuellen Unterstützung einer Bedienperson einer oder mehrerer Bearbeitungsvorrichtungen B1, B2, B3 ist in Fig. 1 schematisch gezeigt. Das System 1 dient in der vorliegenden Ausführungsform zur Unterstützung einer Bedienperson im Zusammenhang mit einer Bearbeitungsvorrichtung B1, B2, B3 zum Bearbeiten von Werkstücken W, die zumindest abschnittsweise aus Holz, Holzwerkstoffen, Kunststoff oder dergleichen bestehen. Bei der Bearbeitungsvorrichtung B1, B2, B3 kann es sich dabei um vielfältige Maschinen und Anlagen handeln, wie beispielsweise Vorrichtungen zum Trennen oder Formatbearbeiten von Werkstücken, Vorrichtungen zum Beschichten oder Oberflächenvergüten von Werkstücken, Vorrichtungen zum spanenden Bearbeiten von Werkstücken oder auch Vorrichtungen zum Montieren von Werkstücken. Derartige Maschinen und Anlagen kommen verbreitet in der Möbel- und Bauelementeindustrie zum Einsatz.

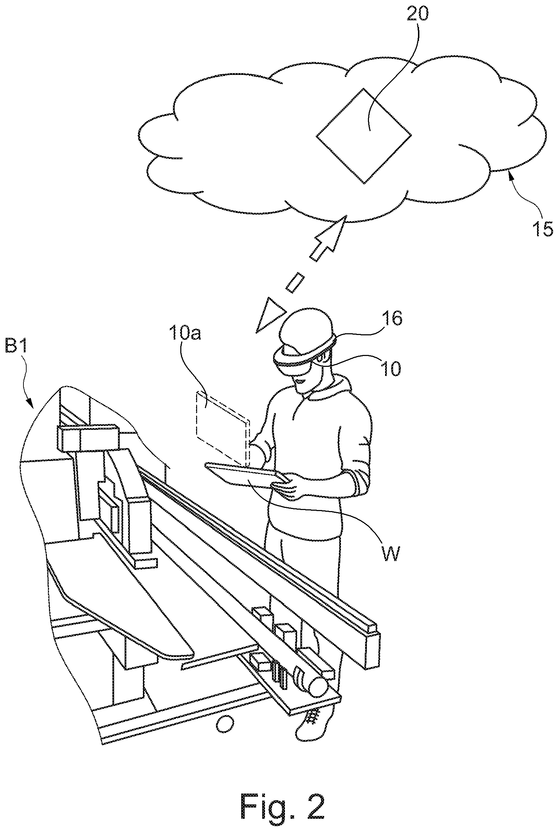

Das System 1 umfasst ein mobiles Endgerät 10, das eingerichtet ist, von der Bedienperson getragen zu werden. Bei dem mobilen Endgerät 10 kann es sich beispielsweise um ein Smart-Device wie etwa ein Smartphone oder einen Tabletcomputer handeln. Alternativ oder zusätzlich kann das mobile Endgerät beispielsweise auch als sogenannte Smartbrille ausgestaltet sein, die eingerichtet ist, am Kopf oder einem anderen Körperteil der Bedienperson getragen zu werden. In diesem Falle weist das mobile Endgerät 10, wie in Fig. 2 gezeigt, Mittel 16 auf, um das Endgerät 10 am Körper der Bedienperson zu tragen, insbesondere am Arm oder im Kopfbereich.

Das mobile Endgerät 10 umfasst zunächst Positionserfassungsmittel 11, die eingerichtet sind, Daten zur Bestimmung der Position des mobilen Endgeräts 10 in Bezug auf die Bearbeitungsvorrichtung B1, B2, B3 zu erfassen. Hierbei können die Positionserfassungsmittel 11 beispielsweise eine Kamera oder einen ähnlichen Sensor aufweisen. Alternativ oder zusätzlich können die Positionserfassungsmittel 11 beispielsweise auch ein Modul für ein globales oder lokales Positioniersystem aufweisen, bei welchem anhand der Sendedaten verschiedener Sender (beispielsweise Satelliten oder lokale Sender) auf die Position des mobilen Endgeräts 10 geschlossen werden kann. Auf diese Weise wird es möglich, stets festzustellen, an welcher genauen Stelle sich das mobile Endgerät 10 in Bezug auf die Bearbeitungsvorrichtung B1, B2, B3 befindet.

Darüber hinaus umfasst das mobile Endgerät 10 Informationsausgabemittel 12, die eingerichtet sind, Informationen und/oder Handlungsanweisungen an die Bedienperson auszugeben. Bei den Informationsausgabemitteln kann es sich beispielsweise um Bildausgabemittel, Tonausgabemittel und Tastausgabemittel, insbesondere Vibrationsausgabemittel handeln. Dabei kann das Bildausgabemittel mindestens eine virtuelle oder projizierte Darstellung 10a beinhalten, die in Fig. 2 veranschaulicht ist und die später noch näher beschrieben wird.

Die Informationsausgabemittel 12 dienen dazu, Informationen und/oder Handlungsanweisungen für die jeweilige Bedienperson unter Bezugnahme auf die Bearbeitungsvorrichtung B1, B2, B3 auszugeben. Somit kann die Bedienperson auf vielfältige Art und Weise unterstützt werden. Beispielsweise kann die Bedienperson an der jeweiligen Bearbeitungsvorrichtung angelernt werden oder allgemein bei der Bedienung, Fehler erkennen, Fehlerbehebung, Reparatur oder Wartung unterstützt werden. Dabei können die Informationen und/oder Handlungsanweisungen vorteilhaft gemeinsam und unter Bezugnahme auf eine tatsächliche oder virtuelle Darstellung der Bearbeitungsvorrichtung B1, B2, B3 ausgegeben werden.

Dies kann konkret bedeuten, dass die Informationen bzw. Handlungsanweisungen einerseits und die betreffenden Bauteile oder Bereich der entsprechenden Bearbeitungsvorrichtung andererseits gemeinsam beispielsweise in einer Bilddarstellung gezeigt und miteinander verknüpft werden. Dem Benutzer wird somit nicht nur eine bestimmte Information oder Handlungsanweisung gegeben, sondern er erhält auch eine direkte Darstellung, auf welchen Bereich oder welches Bauteil der jeweiligen Bearbeitungsvorrichtung sich diese Information bzw. Handlungsanweisung bezieht. Dabei sind auch Schritt-für-Schritt-Anleitungen denkbar, bei denen für jeden weiteren Schritt eine angepasste bildliche Darstellung der Bearbeitungsvorrichtung gezeigt und mit den jeweiligen Informationen bzw. Handlungsanweisungen in Beziehung gesetzt wird.

Selbstverständlich sind auch vielfältige Kombinationen von Informationsausgaben möglich, wobei die jeweilige Informationsausgabe (beispielsweise Sprachausgabe oder Vibrationsausgabe) mit einer tatsächlichen oder virtuellen Darstellung der Bearbeitungsvorrichtung verknüpft wird. So kann beispielsweise je nach angezeigtem Bereich oder Bauteil ein maßgeschneiderter Sprachtext ausgegeben oder eine zielführende Tast-/Vibrationsausgabe erfolgen.

Darüber hinaus umfasst das mobile Endgerät 10 eine Datenübertragungsschnittstelle 13, die eingerichtet ist, mit einem Datenserver 20 zu kommunizieren und in der vorliegenden Ausführungsform als drahtlose Datenübertragungsschnittstelle ausgestaltet ist. Zweck der Datenübertragungsschnittstelle 13 ist es unter anderem, von den Positionserfassungsmitteln 11 erfasste Positionsdaten an den Datenserver 20 zu übertragen und/oder von dem Datenserver 20 erhaltene Informationen und/oder Handlungsanweisungen zur Weitergabe an die Informationsausgabemittel 12 zu empfangen.

Die für die Informationsausgabe jeweils erforderlichen Informationen sind in der vorliegenden Ausführungsform auf dem Datenserver 20 gespeichert und werden maßgeschneidert über die Datenübertragungsschnittstelle 13 an die Informationsausgabemittel 12 des mobilen Endgeräts 10 übertragen. Um der Bedienperson jedoch noch stärkere Einflussmöglichkeiten auf die Bereitstellung von Informationen und/oder Handlungsanweisungen zu geben, weist das mobile Endgerät 10 ferner Eingabemittel 14 auf, die dazu dienen, Eingaben zur Bedienperson zur Weiterleitung an die Datenübertragungsschnittstelle 13 sowie den Datenserver 20 zu empfangen. Hierdurch ergibt sich ein interaktives System, bei welchem die Bedienperson über den Datenserver 20 in permanenter Wechselwirkung und Kooperation mit dem erfindungsgemäßen System 1 zur virtuellen Unterstützung der Bedienperson steht.

Die Eingabemittel 14 können beispielsweise Tasteingabemittel, wie etwa eine Tastatur oder ein Touchscreen, Toneingabemittel einschließlich Spracherkennungsmittel oder auch Bewegungserfassungsmittel wie etwa Gestenerfassungsmittel oder einen virtuellen Touchscreen aufweisen.

Wie in Fig. 1 zu erkennen ist, ergibt sich insgesamt ein Gesamtsystem, bei dem der Datenserver 20 über Datenverbindungen 15 sowohl mit dem mobilen Endgerät 10 als auch mit der Bearbeitungsvorrichtung B1, B2, B3 kommuniziert, wobei mindestens eine Bearbeitungsvorrichtung B1, B2, B3 zu diesem Zweck eine Maschinendatenübertragungsschnittstelle aufweist. Der Datenserver 20 kann sich in einem solchen Gesamtsystem sowohl lokal, etwa innerhalb eines lokalen Netzwerks, aber auch "remote" befinden. Im letzteren Falle kann der Datenserver 20 beispielsweise über das Internet angebunden sein, wobei in diesem Falle davon gesprochen werden kann, dass sich der Datenserver 20 in der sogenannten "Cloud" befindet.

Der Betrieb des erfindungsgemäßen Systems vollzieht sich beispielsweise wie folgt. Wie in Fig. 2 gezeigt, befindet sich eine Bedienperson im Bereich einer Bearbeitungsvorrichtung B1, um einen bestimmten Bedienvorgang an der Bearbeitungsvorrichtung B1 durchzuführen, beispielsweise ein Werkstück W auf bestimmte Art und Weise in die Bearbeitungsvorrichtung B1 einzulegen. Zu deren Unterstützung ist die Bedienperson mit dem mobilen Endgerät 10 in Form einer Smartbrille ausgerüstet, die er mithilfe von Bügeln 16 am Kopf trägt. Die Smartbrille 10 ist dazu ausgelegt, zusätzlich zu verschiedenen Anzeigen im Bereich der Brillengläser auch eine virtuelle Anzeige 10a zu erzeugen, die im Sichtfeld der Bedienperson erscheint. Über eine Gestensteuerung kann diese virtuelle Darstellung 10a auch als Eingabemittel verwendet werden.

Das Gesamtsystem erkennt anhand der Positionserfassungsmittel 11 die aktuelle Position der Bedienperson bzw. des mobilen Endgeräts 10 und ist darüber hinaus aufgrund der Verbindung mit der Maschinendatenschnittstelle der Bearbeitungsvorrichtung B1 über den aktuellen Zustand der Bearbeitungsvorrichtung B1 sowie die anstehenden Bearbeitungsvorgänge unterrichtet. Sobald die Bedienperson durch geeignete Eingaben oder durch vorbestimmtes Verhalten ihre Bereitschaft zum Empfang von Informationen und/oder Handlungsanweisungen signalisiert hat, sendet der Datenserver 20 jeweilige Informationen bzw. Handlungsanweisungen an das mobile Endgerät 10, sodass diese beispielsweise im Bereich der Linsen oder im Bereich der virtuellen Darstellung 10a des mobilen Endgeräts 10 angezeigt werden.

Dabei können dem Benutzer nicht nur isolierte Informationen und/oder Handlungsanweisungen angezeigt werden, sondern diese können in direkte Beziehung zu der jeweiligen Bearbeitungsvorrichtung B1 gesetzt werden. So kann der Bedienperson beispielsweise in direkter Verknüpfung zu der Bearbeitungsvorrichtung dargestellt werden, in welchem Bereich und in welcher räumlichen Ausrichtung das Werkstück W in die Bearbeitungsvorrichtung B1 eingefördert werden soll.

Sobald die Bedienperson diesen Vorgang ausgeführt hat, kann der Abschluss dieses Vorgangs wieder automatisiert durch geeignete Mittel oder auch durch eine ausdrückliche oder konkludente Bestätigung durch die Bedienperson erfolgen. Insoweit kann das mobile Endgerät 10 auch in gewissem Umfang, gegebenenfalls auch sehr weitreichend, zur Steuerung der Bearbeitungsvorrichtung B1 verwendet werden, obgleich dies vorliegend nicht der Hauptzweck sein muss.

In weiteren Schritten kann die Bedienperson auf eine große Vielfalt von Informationen bzw. Handlungsanweisungen zurückgreifen und diese anhand der Eingabemittel 14 auswählen. So kann sich die Bedienperson beispielsweise Tutorials anzeigen lassen, die wiederum in direktem Zusammenhang mit der jeweiligen Bearbeitungsvorrichtung B1, B2, B3 angezeigt werden können. Auch kann die Bedienperson im Falle auftretender Schwierigkeiten unmittelbar Unterstützung zur Fehlerbehebung oder Reparatur der Bearbeitungsvorrichtung anfordern und sich ebenfalls Schritt für Schritt durch die einzelnen erforderlichen Maßnahmen leiten lassen.

In einer bevorzugten Ausführungsform kann die Bedienperson dabei auch Informationen bzw. Handlungsanweisungen abfragen, die sich auf einen Bereich der Bearbeitungsvorrichtung beziehen, der im zusammengebauten Zustand der Bearbeitungsvorrichtung B1, B2, B3 nicht sichtbar ist. Beispielsweise kann der Bedienperson auf Anfrage angezeigt werden, welche Bauteile sich innerhalb eines geschlossenen Gehäuses befinden, und durch welche Maßnahmen sich die Bedienperson möglicherweise Zugang zu diesen Bauteilen verschaffen kann. Ebenso kann der Bedienperson beispielsweise eine explosionsartige Darstellung bestimmter Bauteile oder Bereiche gegeben werden, die wiederum mit Informationen oder Handlungsanweisungen verknüpft werden kann, welche Bereiche oder (Einzel-)bauteile zu behandeln (beispielsweise auszutauschen) sind. Dabei können die jeweiligen Informationen bzw. Handlungsanweisungen beispielsweise in Form von Einzelbildern, Bildersequenzen oder auch Videosequenzen dargestellt und je nach Bedarf und Anschaulichkeit mit den entsprechenden Bereichen bzw. Bauteilen der zugehörigen Bearbeitungsvorrichtung B1, B2, B3 verknüpft werden.

## Patentansprüche

1. System (1) zur virtuellen Unterstützung einer Bedienperson einer Bearbeitungsvorrichtung (B1, B2, B3) zum Bearbeiten von Werkstücken (W), die bevorzugt zumindest abschnittsweise aus Holz, Holzwerkstoffen, Kunststoff oder dergleichen bestehen, umfassend:
ein mobiles Endgerät (10), das eingerichtet ist, von der Bedienperson getragen zu werden, und das aufweist:
Positionserfassungsmittel (11), die eingerichtet sind, Daten zur Bestimmung der Position des mobilen Endgeräts (10) in Bezug auf die Bearbeitungsvorrichtung (B1, B2, B3) zu erfassen,
Informationsausgabemittel (12), die eingerichtet sind, Informationen und/oder Handlungsanweisungen an die Bedienperson auszugeben, und
eine bevorzugt drahtlose Datenübertragungsschnittstelle (13), die eingerichtet ist, mit einem Datenserver (20) zu kommunizieren.

2. System nach Anspruch 1, **dadurch gekennzeichnet, dass** die Datenübertragungsschnittstelle (13) eingerichtet ist, von den Positionserfassungsmitteln (11) erfasste Positionsdaten an den Datenserver (20) zu übertragen und/oder von dem Datenserver (20) erhaltene Informationen und/oder Handlungsanweisungen zur Weitergabe an die Informationsausgabemittel (12) zu empfangen.

3. System nach Anspruch 1 oder 2, **dadurch gekennzeichnet, dass** die Informationsausgabemittel (12) eingerichtet sind, Informationen und/oder Handlungsanweisungen unter Bezugnahme auf die Bearbeitungsvorrichtung (B1, B2, B3) auszugeben, insbesondere gemeinsam und unter Bezugnahme auf eine tatsächliche oder virtuelle Darstellung der Bearbeitungsvorrichtung (B1, B2, B3).

4. System einem der vorhergehenden Ansprüche, **dadurch gekennzeichnet, dass** die Informationsausgabemittel (12) ausgewählt sind aus Bildausgabemittel, Tonausgabemittel und Tastausgabemittel, insbesondere Vibrationsausgabemittel.

5. System nach Anspruch 4, **dadurch gekennzeichnet, dass** die Bildausgabemittel mindestens eine virtuelle oder projizierte Darstellung (10a) beinhalten.

6. System nach einem der vorhergehenden Ansprüche, **dadurch gekennzeichnet, dass** das mobile Endgerät (10) Eingabemittel (14) aufweist, die eingerichtet sind, Eingaben der Bedienperson zur Weiterleitung an die Datenübertragungsschnittstelle (13) sowie den Datenserver (20) zu empfangen, um so den Erhalt von Informationen und/oder Handlungsanweisungen zu steuern.

7. System nach Anspruch 6, **dadurch gekennzeichnet, dass** die Eingabemittel (14) ausgewählt sind aus Tasteingabemittel, insbesondere Tastatur oder Touchscreen, Toneingabemittel, insbesondere Spracherkennungsmittel, und Bewegungserfassungsmittel, insbesondere Gestenerfassungsmittel oder virtueller Touchscreen.

8. System einem der vorhergehenden Ansprüche, **dadurch gekennzeichnet, dass** die Positionserfassungsmittel (11) ausgewählt sind aus Kamera, insbesondere CCD-Kamera, Sensoren einschließlich thermische Sensoren oder Gyro-Sensoren, Laserscanner sowie globales oder lokales Positioniersystem.

9. System einem der vorhergehenden Ansprüche, **dadurch gekennzeichnet, dass** das Endgerät (10) Mittel (16) aufweist, um das Endgerät (10) am Körper der Bedienperson zu tragen, insbesondere am Arm oder im Kopfbereich.

10. System einem der vorhergehenden Ansprüche, ferner umfassend:
mindestens eine Bearbeitungsvorrichtung (B1, B2, B3) zum Bearbeiten von Werkstücken (W), die bevorzugt zumindest abschnittsweise aus Holz, Holzwerkstoffen, Kunststoff oder dergleichen bestehen, und
einen Datenserver (20), der über eine Datenverbindung (15), insbesondere auch unter Nutzung des Internets, mit der Datenübertragungsschnittstelle (13) kommuniziert.

11. System nach Anspruch 10, **dadurch gekennzeichnet, dass** mindestens eine Bearbeitungsvorrichtung (B1, B2, B3) eine Maschinendatenübertragungsschnittstelle aufweist, die über eine Datenverbindung (15), insbesondere auch unter Nutzung des Internets, mit dem Datenserver (20) kommuniziert.

12. Verfahren zur virtuellen Unterstützung einer Bedienperson einer Bearbeitungsvorrichtung (B1, B2, B3) zum Bearbeiten von Werkstücken (W), die bevorzugt zumindest abschnittsweise aus Holz, Holzwerkstoffen, Kunststoff oder dergleichen bestehen, unter Einsatz eines Systems (1) nach einem der vorhergehenden Ansprüche, mit den Schritten:
Erfassen von Daten zur Bestimmung der Position des mobilen Endgeräts (10) in Bezug auf die Bearbeitungsvorrichtung (B1, B2, B3) mittels der Positionserfassungsmittel (11),
Weitergabe der Daten über die Datenübertragungsschnittstelle (13) an den Datenserver (20),
Erhalt von Informationen und/oder Handlungsanweisungen von dem Datenserver (20) und Ausgabe der Informationen und/oder Handlungsanweisungen mittels der Informationsausgabemittel (12).

13. Verfahren nach Anspruch 12, **dadurch gekennzeichnet, dass** aus den von dem Datenserver (20) erhaltenen Informationen und/oder Handlungsanweisungen diejenigen mittels der Informationsausgabemittel (12) angezeigt werden, die mittels der Eingabemittel (14) ausgewählt werden.

14. Verfahren nach Anspruch 12 oder 13, **dadurch gekennzeichnet, dass** die Informationen und/oder Handlungsanweisungen auf eine tatsächliche oder virtuelle Darstellung der Bearbeitungsvorrichtung (B1, B2, B3) Bezug nehmen und bevorzugt gemeinsam mit dieser Darstellung ausgegeben werden.

15. Verfahren nach Anspruch 14, **dadurch gekennzeichnet, dass** eine virtuelle Darstellung mindestens einen Bereich der Bearbeitungsvorrichtung (B1, B2, B3) beinhaltet, der im zusammengebauten Zustand der Bearbeitungsvorrichtung nicht sichtbar ist.

16. Verfahren nach einem der Ansprüche 13 bis 15, **dadurch gekennzeichnet, dass** die mittels der Informationsausgabemittel (12) ausgegebenen Informationen und/oder Handlungsanweisungen Einzelbilder, Bildersequenzen und/oder Videos enthalten.
